# EUROPÄISCHE PATENTANMELDUNG

(11) **EP 0 905 327 A1**
(43) Veröffentlichungstag der Anmeldung: **31.03.1999**
(21) Anmeldenummer: 98116709.1
(22) Anmeldetag: 03.09.1998
(51) Int. Cl.: E03C 1/10, E03B 11/00

(54) **Wasserzulaufvorrichtung**

(30) Priorität: 29.09.1997 DE 29717363 U
(71) Anmelder: WISY AG, 63699 Kefenrod (DE)
(72) Erfinder: Winkler, Nobert, 63699 Kefenrod (DE)
(74) Vertreter: Müller-Wolff, Thomas, Dipl.-Ing.

(57) **Zusammenfassung**

Die Erfindung betrifft eine Wasserzulaufvorrichtung für ein unter Druck stehendes Zulaufrohr, mit dem Frischwasser in einen Wasserbehälter, eine Zysterne o. dgl. eingespeist werden kann, bestehend aus einem freien Auslaufende, das im Abstand A oberhalb eines Zulauftrichters angeordnet ist und einer Ventileinheit, die den Zulauf öffnet oder sperrt, wobei das Auslaufende in Form eines Auslaufstutzens 1 mit einem Ringkragen 2 versehen ist, an dem ein Einfülltrichter 3 in konstantem Abstand befestigt ist, wobei die Rohrmittelachsen 1', 3' vom Einfülltrichter 3 und vom Auslaufstutzen 1 fluchten.

## Beschreibung

Die Erfindung betrifft eine Wasserzulaufvorrichtung für ein unter Druck stehendes Zulaufrohr, mit dem Frischwasser in einen Wasserbehälter, eine Zysterne o. dgl. eingespeist werden kann, bestehend aus einem freien Auslaufende, das im Abstand A oberhalb eines Zulauftrichters angeordnet ist und einer Ventileinheit, die den Zulauf öffnet oder sperrt.

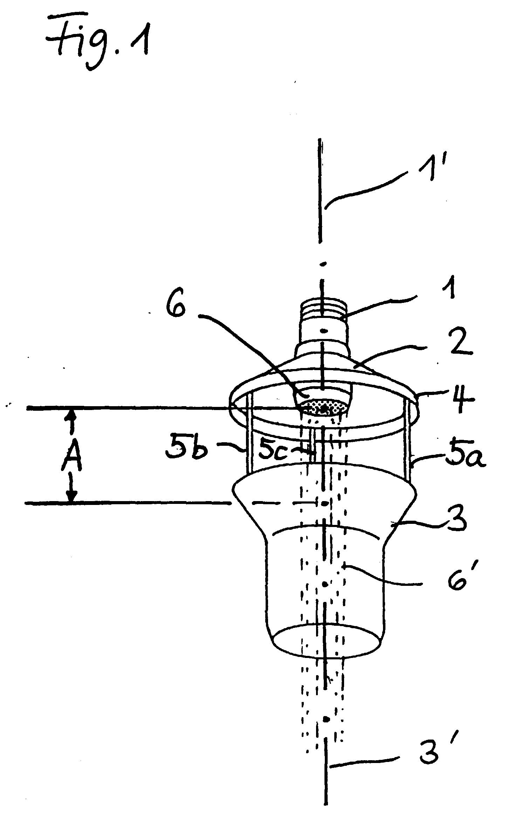

Eine Wasserzulaufvorrichtung der eingangs genannten Art ist aus dem Deutschen Gebrauchsmuster G 93 02 054.6 (Inhaber: Norbert Winkler) bekannt. Im Zusammenhang mit einer Regenwassernutzungsanlage ist dort angegeben, daß ein freier Auslauf der Trinkwasserleitung oberhalb eines trichterförmigen Endes eines Regenwasserzulaufs mündet. Gemäß Figur 1 der bekannten Wasserzulaufvorrichtung ist der freie Auslauf 14 im Anschluß an ein Magnetventil in Form eines gekrümmten Rohrendes dargestellt. Die Auslaßöffnung des Rohrkrümmers liegt etwa mittig über dem Einlauftrichter, der wandseitig oder am Speicher 4 befestigt ist.

Aufgabe der vorliegenden Erfindung ist es, eine Wasserzulaufvorrichtung zu entwickeln, die den Frischwasserzulauf unter allen Betriebszuständen effektiv gewährleistet.

Diese Aufgabe wird erfindungsgemäß durch die im Anspruch 1 angegebenen Merkmale gelöst.

Der Erfindungsgedanke beruht im wesentlichen darauf, daß der aus dem Zulaufrohr austretende Wasserstrahl geordnet in den Speicher fließen kann. Bisher wurde nämlich festgestellt, daß in Abhängigkeit von den jeweiligen Leitungsführungen bzw. eventuell auftretenden Druckschwankungen Luftblasen in den Trichter eingesaugt werden und dabei Luftpolster gebildet werden, die den Wasserablauf hemmen. Dieses kann unter Umständen zu gravierenden Nachteilen bis hin zu einem Austritt des Wassers aus dem Trichter führen.

Für ein geordnetes Ausfließen des Wasserstrahls ist es erforderlich, daß das Auslaufende direkt über dem Einfülltrichter angeordnet ist, wobei der Mindestabstand dem doppelten Innenrohrdurchmesser des Zulaufs entsprechen sollte.

Ferner muß dafür gesorgt sein, daß die Rohrmittelachsen vom Einfülltrichter und vom Auslaufstutzen fluchten. Die Rohrmittelachsen sollten dabei lotrecht zur Wasseroberfläche gehalten werden.

In einer bevorzugten Ausführungsform der Erfindung wird am Wasserauslauf ein Siebeinsatz angeschraubt, der für eine Vergleichmäßigung der Strömung sorgt. Insbesondere bei kurzem Abstand A unterstützt der Siebeinsatz den freien Auslauf.

Eine weitere vorteilhafte Ausführungsform besteht darin, daß das Zulaufrohr unmittelbar vor dem Magnetventil als Druckschlauch ausgebildet ist. Mit dem Druckschlauch kann eine Feinjustierung der erfindungsgemäßen Wasserzulaufvorrichtung erfolgen.

Im folgenden wird ein Ausführungsbeispiel der Erfindung anhand von 2 Zeichnungen näher erläutert. Es zeigen:
- Figur 1:: perspektivische Seitenansicht der erfindungsgemäßen Wasserzulaufvorrichtung,
- Figur 2:: Gesamtansicht des Wasserzulaufs.

Gemäß Figur 1 ist ein Auslaufstutzen 1 mit einem Ringkragen 2 versehen, an dem ein Einfülltrichter 3 in konstantem Abstand A befestigt ist. Man erkennt, daß die Rohrmittelachsen 1', 3' vom Einfülltrichter 3 und vom Auslaufstutzen 1 fluchten.

Hierzu ist am Ringkragen 2 ein Glockenrand 4 in Form einer nach unten geöffneten Glocke ausgebildet, an dem über Trichterhalter 5a, 5b, 5c der Einfülltrichter 3 befestigt ist. Selbstverständlich kann die Befestigung auch in anderer Form erfolgen, wenn sichergestellt ist, daß die Rohrachsen auch bei Ein- und Ausschaltvorgängen und bei den dann auftretenden Druckstößen die fluchtende Position der Rohrmittelachsen beibehalten.

In einer bevorzugten Ausführungsform ist der Einfülltrichter 3 über die Trichterhalter 5a, 5b, 5c permanent, also nicht lösbar, mit dem Glockenrand 4 am Ringkragen 2 verbunden. Eine permanente Befestigung kann durch Schweißen, Nieten oder Löten erfolgen. Es ist aber auch grundsätzlich möglich, den Ringkragen, den Glockenrand und die Trichterhalter zusammen mit dem Einfülltrichter aus einem Stück zu fertigen.

Wie bereits erwähnt, ist es vorteilhaft, am Ende des Auslaufstutzens 1 einen Strahlereinsatz 6 anzuordnen. Hiermit kann die Wirkung der erfindungsgemäßen Vorrichtung insbesondere im Hinblick auf die Bildung von Luft- und Wasserwirbeln verbessert werden, da der Strahler für einen gerade gerichteten Strömungsverlauf sorgt (siehe Frischwasserstrahlbereich 6').

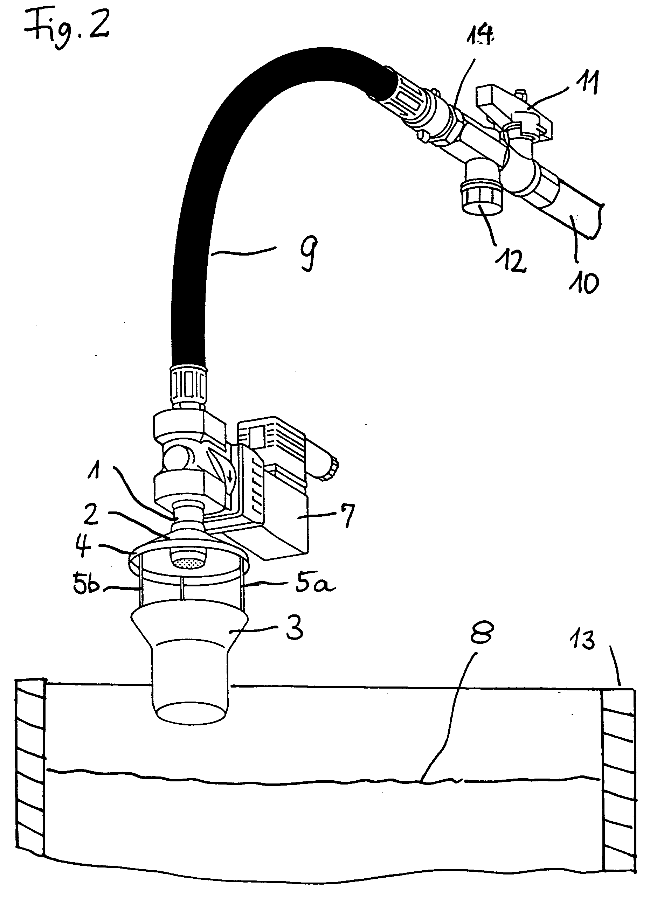

Aus Figur 1 ist ferner erkennbar, daß der Abstand A zwischen dem Auslaufstutzen 1 und dem Einfülltrichter 3 etwa dem doppelten Innendurchmesser des Zulaufrohres entspricht. Das Zulaufrohr ist aus Figur 2 ersichtlich und trägt dort das Bezugszeichen 10.

Aus Figur 2 ist weiterhin ersichtlich, daß an das Zulaufrohr 10 ein Absperrventil 11 mit Filtereinsatz 12 angeschlossen ist. Mit Positionsnummer 14 ist ein Rückflußverhinderer dargestellt, der als zusätzliche Rücklaufsicherheit gegen Schmutzwasser dient.

Hiernach folgt in Durchflußrichtung ein Druckschlauch 9, an dem ein Magnetventil 7 frei beweglich oberhalb der Wasseroberfläche 8 im Behälter 13 angeordnet ist. Die freie Beweglichkeit der Ventileinheit und der Wasserzulaufvorrichtung ist besonders vorteilhaft für den Ausgleich von Druckschwankungen. Druckstöße beim Ein- und Abschalten des Wasserzulaufs können mit dem erfindungsgemäßen Wasserzulauf wirksam kompensiert werden.

Selbstverständlich soll die erfindungsgemäße Wasserzulaufvorrichtung in vertikaler Position betrieben werden, d. h. der Trinkwasseranschluß muß sich oben und der Trinkwasserauslauf unten befinden. Der freie Auslauf ist auf der Zulaufseite vorzugsweise mit einem 1/2 Zoll-Außengewinde versehen, so daß dieser hier mit einem entsprechenden 1/2 Zoll-Innengewindean-schlußstück verschraubt und abgedichtet werden kann. Die Abflußseite des freien Auslaufs ist in angepaßter Weise in eine Muffe mit Dichtung, vorzugsweise eines Rohres mit Nenndurchmesser 50 einzulassen.

Ferner ist darauf zu achten, daß der freie Auslauf in jedem Fall mindestens 150 mm über der Rückstauebene installiert wird, d. h. der Mindestabstand zwischen Austrittsöffnung, Trinkwassersystem und höchstmöglichem Wasserstand muß 150 mm betragen. Auf die Bestimmungen der DIN-Norm 1988, Teil 4, wird hingewiesen.

## Patentansprüche

1. Wasserzulaufvorrichtung für ein unter Druck stehendes Zulaufrohr, mit dem Frischwasser in einen Wasserbehälter, eine Zysterne o. dgl. eingespeist werden kann, bestehend aus einem freien Auslaufende, das im Abstand A oberhalb eines Zulauftrichters angeordnet ist und einer Ventileinheit, die den Zulauf öffnet oder sperrt,
dadurch gekennzeichnet,
daß das Auslaufende in Form eines Auslaufstutzens (1) mit einem Ringkragen (2) versehen ist, an dem ein Einfülltrichter (3) in konstantem Abstand befestigt ist, wobei die Rohrmittelachsen (1'), (3') vom Einfülltrichter (3) und vom Auslaufstutzen (1) fluchten.

2. Wasserzulaufvorrichtung nach Anspruch 1,
dadurch gekennzeichnet,
daß der Einfülltrichter (3) nicht lösbar mit dem Ringkragen (2) verbunden ist.

3. Wasserzulaufvorrichtung nach einem der vorhergehenden Ansprüche,
dadurch gekennzeichnet,
daß der Ringkragen (2) in Form einer nach unten geöffneten Glocke mit am Glockenrand (4) befestigten Trichterhaltern (5a), (5b), (5c) ausgebildet ist.

4. Wasserzulaufvorrichtung nach einem der vorhergehenden Ansprüche,
dadurch gekennnzeichnet,
daß am Ende des Auslaufstutzens (1) ein Strahlereinsatz (6) angeordnet ist.

5. Wasserzulaufvorrichtung nach einem der vorhergehenden Ansprüche,
dadurch gekennnzeichnet,
daß der Abstand A zwischen Auslaufstutzen (1) und Einfülltrichter (3) mindestens dem doppelten Innenrohrdurchmesser des Zulaufrohrs entspricht.

6. Wasserzulaufvorrichtung nach einem der vorhergehenden Ansprüche,
dadurch gekennnzeichnet,
daß die Ventileinheit in Form eines Magnetventils (7) freibeweglich oberhalb der Wasseroberfläche (8) angeordnet ist.

7. Wasserzulaufvorrichtung nach einem der vorhergehenden Ansprüche,
dadurch gekennnzeichnet,
daß das Zulaufrohr unmittelbar vor dem Magnetventil (7) als Druckschlauch (9) ausgebildet ist.
